# EUROPEAN PATENT SPECIFICATION

(11) **EP 1 685 575 B1**
(45) Date of publication and mention of the grant of the patent: **31.12.2008**
(21) Application number: 04797958.8
(22) Date of filing: 16.11.2004
(51) Int. Cl.: H01F 27/38, B60L 9/00, B60L 9/30

(54) **TRACTION TRANSFORMER**
ZUG-TRANSFORMATOR
CONVERTISSEUR DE TRACTION

(30) Priority: 17.11.2003 GB 0326725
(43) Date of publication of application: 02.08.2006
(73) Proprietor: Bombardier Transportation GmbH, 10785 Berlin (DE)
(72) Inventor: RUNGE, Wolfgang, 69198 Schriesheim (DE)
(74) Representative: Broydé, Marc
(86) International application number: PCT/EP2004/013047
(87) International publication number: WO 2005/050678

(56) References cited:
- US-A- 4 581 573
- RUNGE W ED - EPE ASSOCIATION: "CONTROL OF LINE HARMONICS DUE TO FOUR-QUADRANT-CONVERTER IN AC TRACTIVE STOCK BY MEANS OF FILTER AND TRANSFORMER" EPE '97. 7TH. EUROPEAN CONFERENCE ON POWER ELECTRONICS AND APPLICATIONS. TRONDHEIM, SEPT. 8 - 10, 1997, EPE . EUROPEAN CONFERENCE ON POWER ELECTRONICS AND APPLICATIONS, BRUSSELS, EPE ASSOCIATION, B, vol. VOL. 3 CONF. 7, 8 September 1997 (1997-09-08), pages 3459-3464, XP000768335 ISBN: 90-75815-02-6 cited in the application

## Description

The present invention relates to rail vehicle comprising a traction transformer and in particular to the configuration of filter windings for such traction transformers in an auto-transformer configuration.

US 4 581 573 discloses a static converter transformer providing a better filtering effect for disturbing harmonic currents in a high-tension direct current transmission installation. A balancing winding is provided between a primary winding as an outer winding and a secondary winding in a 3-winding transformer with a transformer core. The distances between the balancing winding and the primary winding and the secondary winding, respectively, are selected such that the equivalent reactance of this balancing winding is equal to or less than zero. A second balancing winding can be provided as the inner winding in a series with the first balancing winding. In the case of a 4-winding transformer, two winding arrangements are provided with two parallel-connected primary windings as the outer windings, with a separate secondary winding for each and a balancing winding for each between the primary and secondary windings, the two balancing windings being connected in series.

Modern rail traction vehicles operating on alternating current (AC) supply frequently use pulsed four-quadrant converters (4QCs) as line-side traction converters to convert incoming AC supply to a DC voltage in a vehicle intermediate circuit. The use of 4QCs can however produce unwanted propagation of interference from the vehicle onto the supply. This interference is caused by the switching of the components within the 4QCs and is present as harmonic oscillating signals at the 4QC switching frequency and multiples thereof. The effects and control of such harmonics are described extensively in an article by Runge entitled "Control of Line Harmonics due to Four-Quadrant-Converter in AC Tractive Stock by means of Filter and Transformer" presented at the 7th European Conference on Power Electronics and Applications, 8-10 Sept 1997, Trondheim, Norway.

Limiting the switching-derived AC components in the supply network and the rails to acceptable levels has in the past been achieved in different ways: either the transformer between the line and 4QC must have a considerable short-circuit inductance; or a filter must be fitted to the primary side of the transformer to protect it from interference (see, e.g. Deutsche Bahn locomotives BR 120 and ICE driving units BR 401, 402); or alternatively, an interference filter may be connected to a special filter winding of the transformer (see e.g. Deutsche Bahn locomotives BR 101, 145, 185). The filter winding solution permits utilisation of part of the transformer's short-circuit inductance for the purpose of filtering out interference. The filter winding may then be placed between the primary and secondary (traction) windings. Most widely used configurations are coaxial arrangements of primary, filter and traction windings as layered windings

Frequently, the transformer feeds several 4QCs, e.g. two but mostly four, via a corresponding number of traction windings. The 4QCs' switching is staggered so that their low frequency harmonics cancel each other out to a large extent within the network. To ensure appropriate decoupling of the short-circuit inductances in the various circuits, each traction winding has a separate primary winding allocated to it. All primary windings are arranged in parallel, with the associated filter windings in series. It should be noted that an arrangement of the filter windings in parallel would not be an option since a large part of the decoupled short-circuit inductances of the transformer necessary for limiting the harmonic content in the 4QC circuits would be bypassed.

The filter winding alternative necessitates the use of a more complex and expensive transformer. According to European patent application EP0763833 A (Runge), the contents of which are hereby incorporated by reference in their entirety, increased complexity and expenditure can be partially avoided by using the lowest layer or layers (in terms of voltage) of the primary winding facing the traction winding as filter winding(s) in an auto-transformer configuration. Here, the only increase in complexity and expenditure is to provide a filter extraction point for each primary winding. There will need to be as many filter extraction points as there are traction and primary windings. Once again, arranging the filter windings in parallel and connecting them via a single filter would be out of the question for the same reasons as the above-mentioned parallel arrangement of separate filter windings.

In order to achieve effective connection of the filter windings, one possibility is for a filter to be connected to each extraction point whereby the filters affect all harmonics of the 4QC including the low-frequency ones, which substantially cancel each other out within the network. High-performance filters reduce the impedance within the 4QC circuit and increase the currents to be dealt with within the 4QC, thus causing unnecessarily high dissipation inside the filter. Such a solution with a filter placed at each filter extraction point is therefore more suited to low-performance filters, one application being the audio-frequency filters in Deutsche Bahn electric motor unit BR 423 used for reducing interference currents of 9 kHz or above. In the present context, it is noted that a high performance filter is one that affects mainly the psophometric range around 1Khz and has higher power dissipation. A low performance filter is designed to attenuate audio frequency range signals e.g. above 5Khz where the psophometric weighting factor is very low.

An alternative possibility is for the filter extraction points to be collected with the help of current-dividing chokes to form a single connection point for a filter. For a transformer with two traction and primary windings, one choke suffices, which can be combined with the inductance inside the filter. If there are four windings and extraction points, three chokes would be required to create one filter connection point. The resulting complexity and additional expenditure absorb any economies made by not using a separate filter winding.

If the objective of complete decoupling of the short-circuit inductances between a number of different traction windings is abandoned, those parts of the primary winding to be used as filter saver winding can be arranged in series. To achieve this according to the present invention, there is provided a rail vehicle comprising a traction transformer comprising a first and a second primary winding, each primary winding comprising a filter portion and a main portion, the main portions of each primary winding being connected in parallel between an intermediate point and an upper voltage input, the filter portions of each primary winding being connected in series between the intermediate point and a lower voltage input.

According to a preferred embodiment of a transformer configuration, the traction transformer further comprises first and second traction windings and first and second core legs, a primary winding and a corresponding traction winding being arranged on each core leg. Ideally in such a configuration, the filter portion on each core is located between the main portion and the traction winding whereby the leakage channel and short-circuit inductance between traction windings is increased.

According to an alternative embodiment, the first and second primary windings may be mounted on a single core leg and the traction transformer may further comprise first and second traction windings mounted on the core leg, each primary winding being arranged in relation to a corresponding traction winding. Such a configuration may be provided on an M-core type transformer and may also include further primary and corresponding secondary windings arranged on the central leg of the core.

Preferably, the primary winding is wound in a series of layers and the filter portion occupies a complete number of layers and may be effectively sandwiched between the main portion and the traction winding. Since the filter portions are arranged in series, they must be designed to receive the full primary current over a portion of the voltage. The main portions being arranged in parallel need only be rated for one half of the total primary current. This may be achieved by providing thicker gauge windings for the filter portions. Alternatively, the wires or conductors in the filter portion may be paired to provide twice the gauge with half the number of turns.

According to the invention a filter may be connected between the intermediate point and the lower voltage level. Preferably the filter is a high performance filter such that where the traction transformer is connected to feed an AC-DC converter, the filter is effective to remove common-mode higher harmonic oscillation of the converter.

The invention also relates to a method of increasing the short-circuit inductance of a traction transformer to differential mode current oscillation between a first transformer part comprising a first primary winding and a first traction winding feeding a first converter and a second transformer part comprising a second primary winding and a second traction winding feeding a second converter. The method according to the invention comprises dividing the first and second primary windings into a filter portion and a main portion, connecting the filter portions of the first and second primary windings in series between an intermediate point and a lower voltage level; and connecting the main portions of the first and second primary windings in parallel between the intermediate position and a upper voltage level.

According to an advantageous embodiment of the method, a filter may be connected between the intermediate position and the lower voltage level. The filter characteristics can be matched to the intended operating conditions of the traction transformer and converters to reduce common-mode harmonic oscillation produced by the converter in a primary current between the upper and lower voltage levels.

Embodiments of the present invention will now be described, by way of example only, with reference to the accompanying figures, in which:
Figure 1 is schematic view of a winding layout of a conventional transformer with separate filter windings;
Figure 2 is an equivalent circuit diagram for the transformer of Figure 1;
Figure 3 is schematic view of a winding layout of a transformer with filter windings in an auto-transformer configuration and two filter taps;
Figure 4 is an equivalent circuit for the transformer of Figure 3;
Figure 5 is schematic view of a winding layout of a transformer with series connected filter windings in an auto-transformer configuration according to the present invention;
Figure 6 is an equivalent circuit for the transformer of Figure 5; and
Figure 7 is schematic view of a winding layout of a transformer with three traction windings and three series connected filter windings in an auto-transformer configuration according to the present invention.

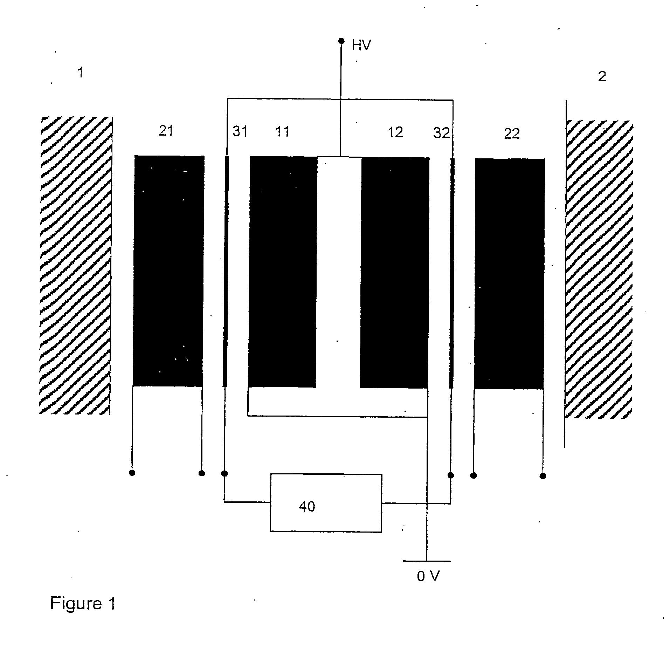

Figure 1 depicts the winding layout for a conventional traction transformer comprising a pair of core legs 1, 2 each wound with a pair of primary windings 11, 12 a pair of traction windings 21, 22 and a pair of filter windings 31, 32 arranged between the primary windings 11, 12. and the traction windings 21, 22. The primary windings 11, 12 are arranged in parallel across a primary voltage while the filter windings 31, 32 are connected in series. A high performance filter 40 is connected at the outlet terminal of the filter windings.

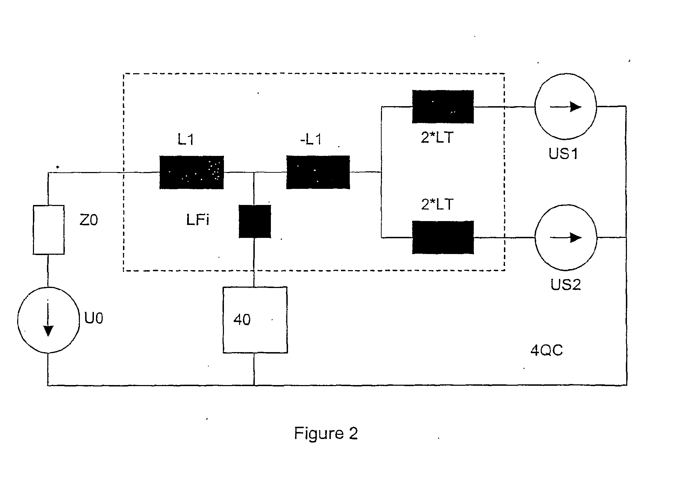

Figure 2 depicts the equivalent circuit (EC) of a transformer as depicted in Figure 1 with conventional separate filter windings. For the purpose of visualisation, only the transformer's inductances are illustrated here. The feeding network of, for instance, 15 kV, 16,7 Hz is represented by a supply source U0 and line impedance Z0. All elements of the EC relate to a common voltage level, most advantageously to the mains voltage. The two 4QCs are represented by their switched converter voltages US1 and US2, extrapolated to mains voltage level using their winding ratio. Switching is effected in differential mode (i.e. switching in counter phase) to ensure that line-side harmonic oscillation at the switching frequency cannot develop. These harmonics circulate between the two 4QCs and the transformer inductances 2*2*LT instead and are not seen from the line. In this instance, LT is the short-circuit inductance of the transformer as a whole, when both traction windings are short-circuited, as measured from the primary voltage side. Input inductance L1 within the transformer's EC but before the point where the filter branch emerges is within the range of L1=0,4...0,6*LT, whereas the filter-side inductance LFi stands at 0,01 to 0,02*LT. The fact that, within the transformer's EC according to Figure 2, the inductance 2*LT appears in both output branches means that the short-circuit inductances of the winding systems on both columns are completely uncoupled and that neither the filter winding nor the interference filter 40 connected to it affect the differential mode or counter-phase harmonics at the two converter voltages US 1 and US2. This means, above all, that the highest amplitude current fluctuations at the switching frequency are determined by the transformer's total inductance 2*LT. Only the higher harmonics of the switching frequency are in common mode within US1 and US2. They cause current fluctuations in the network, which can be effectively levelled off by use of the high performance filter 40. Since the higher harmonics in common mode have lower amplitudes in US 1 ,US2 than the low ones and since, due to their higher frequency, reactive impedances are larger, the current fluctuations to be conducted via the 4QCs do not figure to a large extent in the total load of the 4QCs determined by the first harmonic plus further harmonics, despite taking the bypass through the filter 40, meaning that the use of a high performance interference filter 40 according to Figure 1 and Figure 2 causes practically no additional load in the 4QCs.

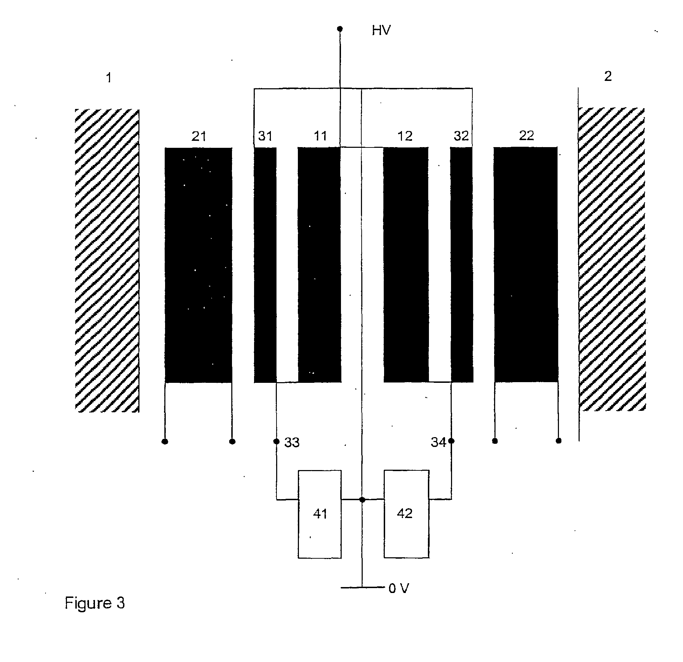

Figure 3 depicts the winding layout for a traction transformer incorporating a filter in auto-transformer configuration in accordance with EP0763833 A. In the figure, components corresponding to like components in Figure 1 will be provided with the same reference numerals, which will be adhered to throughout the remaining description. The transformer again comprises a pair of core legs 1, 2 each wound with a pair of primary windings 11, 12 and a pair of traction windings 21, 22. Filter windings 31, 32 are arranged between the primary windings 11, 12 and the traction windings 21, 22. Unlike the transformer of Figure 1, the filter windings of Figure 3 are arranged in auto-transformer configuration as part of the primary windings. The combined primary and filter windings 11, 12, 31, 32 are arranged in parallel across the primary voltage. Filter extraction points 33, 34 allow connection of individual filters 41, 42.

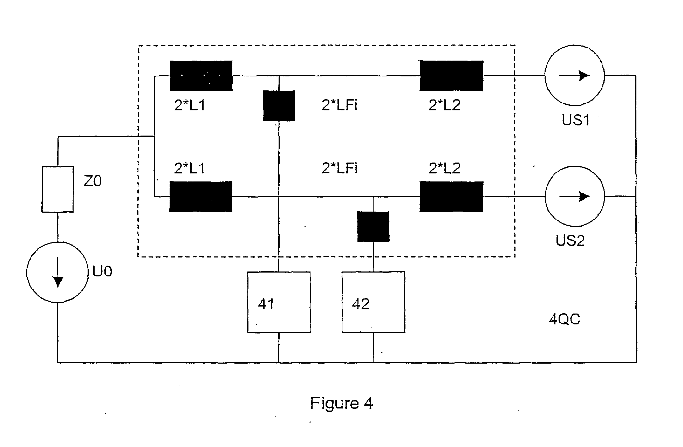

The configuration according to Figure 3 produces an EC as shown in Figure 4. Without connecting filters, two separate transformer halves are depicted, each with 2*LT=2*L1 +2*L2. As depicted, if filters 41, 42 connected at the two filter extraction points 33, 34, were high-performance filters, part of the inductance important for the limitation of primary current ripple namely 2*L1 would be bypassed. For this reason, this filter configuration is only suitable for low-performance filters (such as audio-frequency filters) or as described in EP0763833 A, requires a current-dividing choke inserted between the two filter taps in order to create a connection point for a single filter. As mentioned above, combining filter taps using current dividing chokes is especially impractical in cases where more than two traction and primary coils are present.

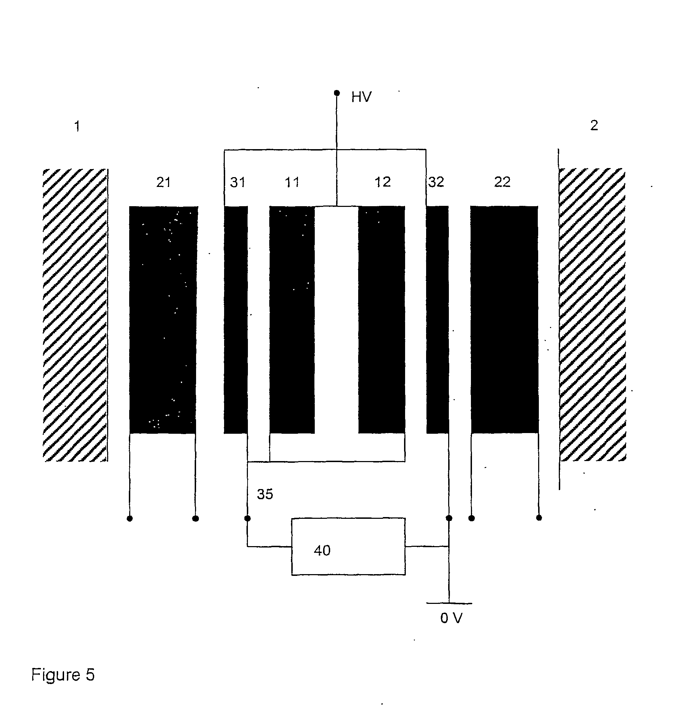

All these limitations do not apply to an arrangement according to the present invention as shown in Figure 5, which again shows a winding layout for a traction transformer with two traction windings. The transformer of Figure 5 also comprises a pair of core legs 1, 2 each wound with a pair of primary windings 11, 12, a pair of traction windings 21, 22 and a pair of filter windings 31, 32 therebetween. According to the present invention however, in this case the filter windings 31, 32 are connected in series with one another and also in series with the parallel connected primary windings 11, 12. In this manner, an intermediate point serving as a possible filter extraction point 35 is created for connection of high performance filter 40. As will be described further below, the transformer may also be operated without an extraction point for a filter at the intermediate point. The serial arrangement of both filter windings 31, 32 as filter saver winding requires that they are designed for the primary current of the transformer as a whole and for a voltage appropriate to the filter 40, for instance 1000 V. The filter saver windings 31, 32 should comprise a number of complete layers, preferably one each on the two core legs 1,2. Since the primary windings 11, 12 are arranged in parallel between the two core legs 1, 2, each conducts only one half of the total current. Although not shown in Figure 5, it should also be noted that between the primary winding and filter winding on each core leg, the voltage difference is low so that, only the customary inter-layer insulation distance is required. The primary winding 11 and filter winding 31 on core leg 1 together form a winding block, so that the combined winding unit takes up the same space as a primary winding unit exclusively made up of parts arranged in parallel, with or without filter extraction points. When both traction windings 21 and 22 are symmetrically charged, the transformer with serially arranged filter saver windings 31, 32 according to Figure 5 has the same ampere-turns and thus the same leakage field and short-circuit inductance between primary and traction windings as the conventional type.

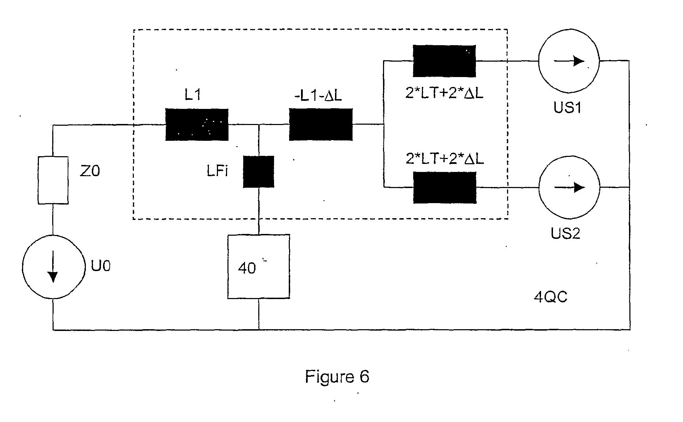

The EC for the configuration of Figure 5 is depicted in Figure 6 and displays substantially the same structure as that of Figure 2 for the transformer with separate filter winding. The only difference with respect to Figure 2 is that the short-circuit inductances of the systems mounted respectively on core legs 1, 2 are now no longer completely uncoupled. This is of course to be expected due to the serial connection of the filter windings 31, 32 which, since they are in saver configuration, effectively form part of the primary windings 11, 12. The coupling of the two systems registers as negative inductance -ΔL in their common path. As the short-circuit inductance LT of the transformer is not affected by the primary windings being either parallel or part.serially connected, inductance 2*LT+2*ΔL is found in each of the branches linked to US1 and US2. This effectively means an increase in that inductance which determines current ripple due to the differential mode harmonics arising from the anti-phase pulsation of the 4QC's. This is of course to be expected in view of the winding arrangement depicted in Figure 5 and is due directly to the series arrangement of the filter windings 31, 32.

If the traction winding 22 of the transformer of Figure 5 is short-circuited, the transformer halves mounted respectively on core legs 1 and 2 are only connected via the parallel connection of the primary windings 11, 12. The serially connected filter windings 31, 32 lie idle between their respective traction windings 21, 22 and primary windings 11, 12. Measurements taken from within traction winding 21 would thus show the leakage flux channel between each pair of windings to be wider than if the complete winding unit comprising the primary and filter windings were involved. The leakage flux represented by the total winding volume and, in particular, the leakage flux channel is significant in determining short-circuit inductance. This aspect of increased inductance within the anti-phase circuit leading to a decrease of the harmonic current oscillation in the 4QC is an added advantage of this kind of circuit. Compared to this advantage, the disadvantage of incomplete decoupling of the 4QC circuit is insignificant since, where appropriate, the positive line inductance and - in four- or six-winding transformers, the positive coupling inductance - adds to the negative coupling inductance between neighbouring winding systems on the same core leg.

Establishing the short-circuit inductance of a traction transformer is a matter of optimisation requiring a compromise between the conflicting aims of low transformer loss and low fundamental frequency reactive power on the one hand and low harmonic current oscillation in the 4QC and the line on the other. The increase of differential mode inductances by 2*ΔL with LT unchanged and the resulting decrease in fundamental frequency reactive power creates a new degree of freedom for optimisation. For the purpose of adjusting the differential mode inductance without the use of a high performance filter, ratios of filter voltage to primary voltage of up to 0.6 may be used, preferably in the range from 0.3 to 0.5. For use in conjunction with a high performance filter, lower values of this ratio may be desirable in the region of 0.1.

The transformer of the BR 423 mentioned above comprises a primary coil having a total of 10 layers. By providing two filter taps after the first layer at 1500 V and with the variation according to the present invention of serial connection of the filter winding in auto-transformer configuration according to Figure 5, the effect described above can be numerically evaluated and compared with an embodiment using separate series connected filter windings e.g. according to Figure 1. All values refer to 15 kV line voltage as the basis for the calculation.

| | |
|---|---|
| Total short circuit inductance of both embodiments | - LT= 476 mH |
| Divided into | L1= 206 mH and |
| | L2= 270 mH. |
| | |
| Counter-phase inductance per 4QC, standard circuit | 2*LT= 952 mH |
| Counter-phase inductance per 4QC, serial auto-transformer | 2*ΔL+2*LT= 1040 mH (9,2% more) |
| | |
| Coupling inductance due to serial auto-transformer | -ΔL= -44 mH |

When considering these figures, one has to bear in mind the relatively high voltage of 1500 V for the filter tap. The lower the filter voltage chosen, or the higher the ratio between primary and filter voltage, the less pronounced the coupling inductance ΔL will be.

For transformers comprising four or six traction and primary windings (layered windings) the filter auto-transformer with serial connections for all four, or all six filter winding parts of the primary winding and parallel connections for all the main parts of the primary winding can be applied in the same way as for the two-winding configuration described above. Other embodiments and combinations are also possible, e.g. combining a pair of filter saver windings in series to a single filter connection point.for a pair of windings on each transformer core.

Additional windings for the supply of the train's auxiliary circuits and heating systems may also be provided, spread equally over both core legs with the winding halves connected serially or in parallel. In such a configuration, the serial connection of the filter saver winding does not affect their integration into the transformer EC. If however, one-sided auxiliary windings arranged on only one core are used, this can be the case, although any influence occurring is marginal.

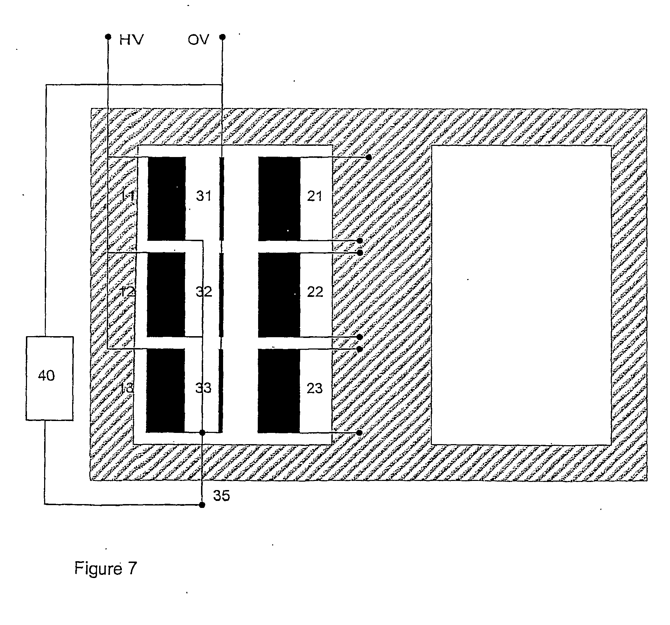

Figure 7 shows a possibility in which three sets of windings are provided mounted on the central core leg of an M-core. In a similar manner to the transformer depicted in Figure 5, primary windings 11, 12, 13 forming an outer layer are all connected in parallel. The inner-most layers of the primary windings 11, 12, 13 are tapped to provide filter windings 31, 32, 33, which are connected in series between intermediate point 35 and ground. A high performance filter 40 may be connected across the filter windings. The filter windings 31, 32, 33, separate the primary windings 11, 12, 13 from traction windings 21, 22, 23 provided as the most inward layer of the transformer.

While the above examples illustrate preferred examples of the present invention it is noted that various other arrangements may also be considered which fall within the scope of the present invention.

## Claims

1. A rail vehicle comprising a traction transformer comprising a first and a second primary winding, each primary winding comprising a filter portion (31, 32) and a main portion (11, 12), the main portions of each primary winding being connected in parallel between an intermediate point (35) and an upper voltage input (HV), the filter portions of each primary winding being connected in series between the intermediate point and a lower voltage input.

2. The rail vehicle according to claim 1, wherein the traction transformer further comprises first and second traction windings (21, 22) and first and second core legs (1, 2), a primary winding and a corresponding traction winding being arranged on each core leg.

3. The rail vehicle according to claim 2, wherein on each core leg, the filter portion is located between the main portion and the traction winding.

4. The rail vehicle according to claim 1, wherein the first and second primary windings are mounted on a single core leg and the traction transformer further comprises first and second traction windings mounted on the core leg, each primary winding being arranged in relation to a corresponding traction winding.

5. The rail vehicle according to claim 4, wherein for each primary winding, the filter portion is located between the main portion and the corresponding traction winding.

6. The rail vehicle according to claim 4 or 5, comprising a plurality of core legs, a number of primary windings and a corresponding number of traction windings being mounted on each core.

7. The rail vehicle according to any preceding claim, wherein each primary winding is wound in a series of layers with the filter portion occupying a complete number of layers.

8. The rail vehicle according to any preceding claim, further comprising a filter (40) connected between the intermediate point and the lower voltage input.

9. The rail vehicle according to claim 8, wherein the traction transformer is connected to feed an AC-DC converter and the filter is a high performance filter, operative in the psophometric frequency range, to remove common-mode harmonic oscillation produced by the converter in a primary current between the upper and lower voltage inputs.

10. The rail vehicle according to claim 9, wherein the AC-DC converter comprises a four-quadrant converter connected to each traction winding.

11. The rail vehicle according to any preceding claim, wherein the turn ratio of the first winding portion to the second winding portion is between 0.05 and 0.3.

12. The rail vehicle according to any preceding claim, wherein the filter portions are serially connected internally of the transformer and the intermediate point is provided as a tap.

13. A method of increasing the short-circuit inductance of a traction transformer to differential mode current oscillation between a first transformer part comprising a first primary winding and a first traction winding feeding a first converter and a second transformer part comprising a second primary winding and a second traction winding feeding a second converter, the method comprising:
dividing the first and second primary windings into a filter portion (31, 32) and a main portion (11, 12);
connecting the filter portions of the first and second primary windings in series between an intermediate point (35) and a lower voltage level; and connecting the main portions (11, 12) of the first and second primary windings in parallel between the intermediate position and a upper voltage level.

14. The method according to claim 13, further comprising connecting a filter (40) between the intermediate position and the lower voltage level for reducing common-mode harmonic oscillation produced by the converter in a primary current between the upper and lower voltage levels.

15. A method of reducing the propagation of low frequency interference onto a rail supply network from a converter, incorporating the method according to claim 13 or claim 14, further comprising supplying a voltage from the rail supply network across the first and second transformer inputs.

## Patentansprüche

1. Ein Schienenfahrzeug umfassend einen Zugtransformator umfassend eine erste und eine zweite Primärwicklung, wobei jede Primärwicklung einen Filterteil (31, 32) und einen Hauptteil (11, 12) umfasst, wobei die Hauptteile von jeder Primärwicklung parallel zwischen einem Zwischenpunkt (35) und einem Oberspannungseingang (HV) geschaltet sind, wobei die Filterteile von jeder Primärwicklung in Serie zwischen dem Zwischenpunkt (35) und einem Unterspannungseingang geschaltet sind.

2. Das Schienenfahrzeug nach Anspruch 1, wobei der Zugtransformator ferner erste und zweite Fahrzeugwicklungen (21, 22) und erste und zweite Schenkelkerne (1, 2) umfasst, wobei eine Primärwicklung und eine korrespondierende Fahrzeugwicklung auf jedem Schenkelkern angeordnet sind.

3. Das Schienenfahrzeug nach Anspruch 2, wobei auf jedem Schenkelkern der Filterteil zwischen dem Hauptteil und der Fahrzeugwicklung liegt.

4. Das Schienenfahrzeug nach Anspruch 1, wobei die ersten und zweiten Primärwicklungen auf einen einzelnen Schenkelkern abgeordnet sind und der Zugtransformator ferner erste und zweite auf dem einzelnen Schenkelkern angebrachte Fahrzeugwicklungen umfasst, wobei jede Primärwicklung in Bezug zu einer korrespondierenden Fahrzeugwicklung angeordnet ist.

5. Das Schienenfahrzeug nach Anspruch 4, wobei für jede Primärwicklung der Filterteil zwischen dem Hauptteil und der korrespondierenden Fahrzeugwicklung liegt.

6. Das Schienenfahrzeug nach einem der Ansprüche 4 oder 5, umfassend eine Mehrzahl an Schenkelkernen, wobei eine Anzahl an Primärwicklungen und korrespondierenden Fahrzeugwicklungen auf jedem Schenkelkern angebracht ist.

7. Das Schienenfahrzeug nach einem der vorherigen Ansprüche, wobei jede Primärwicklung in einer Folge von Schichten mit dem Filterteil gewickelt ist, wobei die gesamte Anzahl an Schichten genutzt wird.

8. Das Schienenfahrzeug nach einem der vorherigen Ansprüche, ferner umfassend einen zwischen dem Zwischenpunkt und dem Unterspannungseingang verbundenen Filter (40).

9. Das Schienenfahrzeug nach Anspruch 8, wobei der Zugtransformator verbunden ist zum Speisen eines AC-DC Wandlers und der Filter ein Hochleistungsfilter ist betriebsfähig im psophometrischen Frequenzbereich um gleichphasige in einem Primärstrom zwischen den Ober- und Unterspannungseingängen durch den Wandler erzeugte Oberschwingungen zu entfernen.

10. Das Schienenfahrzeug nach Anspruch 9, wobei der AC-DC Wandler einen mit jeder Fahrzeugwicklung verbundenen Vierquadranten Wandler umfasst.

11. Das Schienenfahrzeug nach einem der vorherigen Ansprüche, wobei das Wicklungsverhältnis des ersten Wicklungsteils zum zweiten Wicklungsteil zwischen 0,05 und 0,3 liegt.

12. Das Schienenfahrzeug nach einem der vorherigen Ansprüche, wobei die Filterteile des Transformators intern in Serie geschaltet sind und der Zwischenpunkt als Abgriff vorgesehen ist.

13. Ein Verfahren zum Erhöhen der Kurzschlussinduktivität eines Zugtransformators aufgrund einer Gegentaktstrom-Oszillation zwischen einem ersten Transformatorteil umfassend eine erste Primärwicklung und eine erste Fahrzeugwicklung, die einen ersten Wandler speisen und eine zweite Primärwicklung und eine zweite Fahrzeugwicklung, die einen zweiten Wandler speisen, wobei das Verfahren umfasst:
teilen der ersten und zweiten Primärwicklung in einen Filterteil (31, 32) und einen Hauptteil (11, 12);
schalten der Filterteile der ersten und zweiten Primärwicklungen in Serie zwischen einem Zwischenpunkt und einem unteren Spannungslevel; und schalten der Hauptteile der ersten und zweiten Primärwicklungen parallel zueinander zwischen dem Zwischenpunkt und einen oberen Spannungslevel.

14. Das Verfahren nach Anspruch 13, ferner umfassend schalten eines Filters zwischen dem Zwischenpunkt und dem unteren Spannungslevel zur Reduzierung von gleichphasigen durch den Wandler in einem Primärstrom zwischen dem oberen und dem unteren Spannungslevel erzeugten Oberschwingungen.

15. Ein Verfahren zur Reduzierung der Ausbreitung von geringen Frequenzstörungen auf ein Schienenversorgungsnetzwerk von einem Wandler, umfassend das Verfahren nach einem der Ansprüche 13 oder 14, ferner umfassend einspeisen einer Spannung von einem Schienenversorgungsnetzwerk herüber zu den ersten und zweiten Transformatoreingängen.

## Revendications

1. Véhicule ferroviaire comprenant un transformateur de traction comprenant un premier et un second enroulements primaires, chaque enroulement primaire comprenant une partie de filtre (31, 32) et une partie principale (11, 12), les parties principales de chaque enroulement primaire étant connectées en parallèle entre un point intermédiaire (35) et une entrée de tension supérieure (HV), les parties de filtre de chaque enroulement primaire étant connectées en série entre le point intermédiaire et une entrée de tension inférieure.

2. Véhicule ferroviaire selon la revendication 1, dans lequel le transformateur de traction comprend en outre des premier et second enroulements de traction (21, 22) et des première et seconde colonnes (1, 2), un enroulement primaire et un enroulement de traction correspondant étant agencés sur chaque colonne.

3. Véhicule ferroviaire selon la revendication 2, dans lequel sur chaque colonne, la partie de filtre est située entre la partie principale et l'enroulement de traction.

4. Véhicule ferroviaire selon la revendication 1, dans lequel les premier et second enroulements primaires sont montés sur une seule colonne et le transformateur de traction comprend en outre des premier et second enroulements de traction montés sur la colonne, chaque enroulement primaire étant agencé par rapport à un enroulement de traction correspondant.

5. Véhicule ferroviaire selon la revendication 4, dans lequel pour chaque enroulement primaire, la partie de filtre est située entre la partie principale et l'enroulement de traction correspondant.

6. Véhicule ferroviaire selon la revendication 4 ou 5, comprenant une pluralité de colonnes, un certain nombre d'enroulements primaires et un nombre correspondant d'enroulements de traction étant montés sur chaque noyau.

7. Véhicule ferroviaire selon l'une quelconque des revendications précédentes, dans lequel chaque enroulement primaire est enroulé en une série de couches, la partie de filtre occupant un nombre complet de couches.

8. Véhicule ferroviaire selon l'une quelconque des revendications précédentes, comprenant en outre un filtre (40) connecté entre le point intermédiaire et l'entrée de tension inférieure.

9. Véhicule ferroviaire selon la revendication 8, dans lequel le transformateur de traction est connecté pour alimenter un convertisseur CA-CC et le filtre est un filtre à haute performance qui fonctionne dans une plage de fréquences psophométriques, pour éliminer l'oscillation harmonique de mode commun produite par le convertisseur dans un courant primaire entre les entrées de tension supérieure et inférieure.

10. Véhicule ferroviaire selon la revendication 9, dans lequel le convertisseur CA-CC comprend un convertisseur à quatre cadrans connecté à chaque enroulement de traction.

11. Véhicule ferroviaire selon l'une quelconque des revendications précédentes, dans lequel le rapport de spires de la première partie d'enroulement sur la seconde partie d'enroulement est compris entre 0,05 et 0,3.

12. Véhicule ferroviaire selon l'une quelconque des revendications précédentes, dans lequel les parties de filtre sont connectées en série à l'intérieur du transformateur et le point intermédiaire est fourni en tant que prise.

13. Procédé d'augmentation de l'inductance de court-circuit d'un transformateur de traction jusqu'à une oscillation de courant en mode différentiel entre une première partie de transformateur comprenant un premier enroulement primaire et un premier enroulement de traction alimentant un premier convertisseur et une seconde partie de transformateur comprenant un second enroulement primaire et un second enroulement de traction alimentant un second convertisseur, le procédé comprenant :
la division des premier et second enroulements primaires en une partie de filtre (31, 32) et une partie principale (11, 12) ;
la connexion des parties de filtre des premier et second enroulements primaires en série entre un point intermédiaire (35) et un niveau de tension inférieur ; et
la connexion des parties principales (11, 12) des premier et second enroulements primaires en parallèle entre la position intermédiaire et un niveau de tension supérieur.

14. Procédé selon la revendication 13, comprenant en outre la connexion d'un filtre (40) entre la position intermédiaire et un niveau de tension inférieur, afin de réduire l'oscillation harmonique de mode commun produite par le convertisseur dans un courant primaire entre les niveaux de tension supérieur et inférieur.

15. Procédé de réduction de la propagation d'une interférence de basse fréquence sur un réseau d'alimentation d'un rail à partir d'un convertisseur, intégrant le procédé selon la revendication 13 ou la revendication 14, comprenant en outre l'alimentation d'une tension à partir du réseau d'alimentation du rail sur l'ensemble des première et seconde entrées du transformateur.
